**Europäisches Patentamt**

**European Patent Office**

**Office européen des brevets**

(19)

(11) Veröffentlichungsnummer: **0 093 108**
A2

(12) # EUROPÄISCHE PATENTANMELDUNG

(21) Anmeldenummer: **83890056.1**

(22) Anmeldetag: **19.04.83**

(51) Int. Cl.³: **G 02 C 1/04**

(30) Priorität: **27.04.82 AT 1626/82**

(43) Veröffentlichungstag der Anmeldung:
**02.11.83 Patentblatt 83/44**

(84) Benannte Vertragsstaaten:
**BE CH DE FR GB IT LI NL SE**

(71) Anmelder: **A. Schmied Silhouette-Modellbrillen
Fabrikationsgesellschaft m.b.H.
Ellbognerstrasse 24
A-4021 Linz(AT)**

(72) Erfinder: **Schmied, Arnold
Hanriederstrasse 25
A-4020 Linz(AT)**

(74) Vertreter: **Hübscher, Gerhard, Dipl.-Ing. et al,
Patentanwälte Dipl.-Ing. Gerhard Hübscher Dipl.-Ing.
Helmut Hübscher Dipl.-Ing. Heiner Hübscher
Spittelwiese 7
A-4020 Linz(AT)**

(54) **Fassung für Brillengläser.**

(57) Eine Fassung für Brillengläser (7) besteht aus einem die obere Glashalterung bildenden Metallrahmen (1), der auf seiner Innenseite eine hinterschnittene Längsnut (2) zur Aufnahme eines Profilfadens (3) aus Kunststoff mit einem aus der Längsnut (2) vorragenden Steg (6) zum Eingriff in die Umfangsnut des Brillenglases (7) aufweist, und aus einem die untere Glashalterung bildenden, die freien Schenkel des Metallrahmens (1) verbindenden Kunststoffaden (4).

Um eine einfache, sichere Verbindung zwischen dem Kunststoffaden (4) und dem Metallrahmen (1) zu erhalten, erstreckt sich der Steg (6) des Profilfadens (3) der oberen Glashalterung über den gesamten unteren Fassungsrand und bildet den Kunststoffaden (4) der unteren Glashalterung, wobei die von beiden Seiten in die Längsnut (2) des Metallrahmens (1) eingeschobenen Enden (8) des Profilfadens (3) durch in der Längsnut (2) vorgesehene Anschläge (9) für die Stirnseiten des in die Längsnut (2) eingreifenden Profilfadenteiles (5) gegen ein Herausziehen festgehalten sind.

FIG.1

EP 0 093 108 A2

## Fassung für Brillengläser

Die Erfindung bezieht sich auf eine Fassung für Brillengläser, bestehend aus einem die obere Glashalterung bildenden Metallrahmen, der auf seiner Innenseite eine hinterschnittene Längsnut zur Aufnahme eines Profilfadens aus Kunststoff mit einem aus der Längsnut vorragenden Steg zum Eingriff in die Umfangsnut eines Brillenglases aufweist, und aus einem die untere Glashalterung bildenden, die freien Schenkel des Metallrahmens verbindenden Kunststoffaden.

Bei bekannten Fassungen dieser Art ergeben sich hinsichtlich der Verbindung des die untere Glashalterung bildenden Kunststoffadens mit den freien Schenkeln des Metallrahmens der oberen Glashalterung Schwierigkeiten, weil die Länge des Kunststoffadens zwischen den beiden Schenkeln des Metallrahmens unter Einhaltung geringer Toleranzen an das aufzunehmende Brillenglas angepaßt werden muß. Die Spannung dieses Kunststoffadens bedingt ja den Halt des Glases in der Fassung.

Wird der Kunststoffaden der unteren Glashalterung in üblicher Weise mit den freien Schenkeln des Metallrahmens verbunden, indem der Kunststoffaden durch zwei Durchtrittslöcher im Boden der Längsnut des Metallrahmens gezogen wird, so ist eine genaue Längenabstimmung naturgemäß kaum möglich. Abgesehen davon, daß die durch die Durchtrittslöcher gezogene Schlaufe des Kunststoffadens von außen sichtbar ist, wird der Kunststoffaden wegen der Schlaufenbildung in seinem Befestigungsbereich aus der Umfangsnut des Brillenglases herausgezogen. Außerdem kann durch das Durchführen des Kunststoffadens durch die Durchtrittslöcher keine verschiebesichere Befestigung erhalten werden, wozu noch kommt, daß der Kunststoffaden einer Knickgefahr ausgesetzt ist.

Erfolgt die Verbindung des Kunststoffadens mit den freien Schenkeln des Metallrahmens über eine Spannschraube, so ist zwar eine genaue Längenabstimmung und allenfalls ein einfaches Nachspannen möglich, doch wird diese aufwendige Spanneinrichtung als störend empfunden, weil sie notwendigerweise eine Mindeststärke des Metallrahmens verlangt.

Der Erfindung liegt somit die Aufgabe zugrunde, eine Brillenfassung der eingangs geschilderten Art so zu verbessern, daß mit einfachen Mitteln eine von außen nicht erkennbare Verbindung des die untere Glashalterung bildenden Kunststoffadens mit den freien Schenkeln des Metallrahmens der oberen Glashalterung gewährleistet werden kann, und zwar unter Einhaltung einer vorgegebenen Fadenlänge für die untere Glashalterung.

Die Erfindung löst die gestellte Aufgabe dadurch, daß sich der Steg des Profilfadens der oberen Glashalterung über den gesamten unteren Fassungsrand erstreckt und den Kunststoffaden der unteren Glashalterung bildet, wobei die von beiden Seiten in die Längsnut des Metallrahmens eingeschobenen Enden des Profilfadens durch im Bereich der freien Schenkel des Metallrahmens in der Längsnut vorgesehene Anschläge für die Stirnseiten des in die Längsnut eingreifenden Profilfadenteiles gegen ein Herausziehen aus der Längsnut festgehalten sind.

Da zufolge dieser Maßnahmen der Kunststoffaden der unteren Glashalterung durch den Profilfaden der oberen Glashalterung gebildet wird, erübrigt sich eine gesonderte Befestigung des Kunststoffadens für die untere Glashalterung. Es genügt, die von beiden Seiten in die Längsnut des Metallrahmens eingeschobenen Enden gegen ein Herausziehen aus der Längsnut zu sichern, was in einfacher Weise durch Anschläge erfolgen kann, an die sich die Stirnseiten des in die Längsnut eingreifenden Profilfadenteiles anlegen. Da die Lage der Anschläge sehr genau bestimmt werden kann, kann eine vorgegebene Länge des Kunststoffadens zwischen diesen Anschlägen einfach eingehalten werden. Die Länge des über die Anschläge hinaus verlängerten, die untere Glashalterung bildenden Steges ist bei der Anpassung des Profilfadens an die Form und Größe der Fassung bzw. des Brillenglases einfach zu bestimmen, vor allem dann, wenn der zum Eingriff in die Längsnut bestimmte Teil des Profilfadens zwischen den Anschlägen vor dem Einsetzen des Profilfadens in den Metallrahmen vom Steg abgetrennt wird.

Die Verbindung des Kunststoffadens mit dem Metallrahmen ist dabei nach dem Einsetzen des Brillenglases von außen nicht erkennbar, wobei der zusätzliche Vorteil erzielt wird, daß durch die Verlängerung des Steges des Profilfadens dieser Faden über seine volle Länge in Eingriff mit der Umfangsnut des Brillenglases gehalten wird, weil über die Eigenelastizität des Kunststoffadens das Brillenglas spannend umfaßt wird.

Um die Anschläge zur Abstützung des Profilfadens nach dem Einschieben der Profilfadenenden in die Längsnut des Metallrahmens vorteilhaft anbringen zu können, können die Anschläge aus einem in die Längsnut des Metallrahmens einsetzbaren Bolzen bestehen. Da die Bolzen erst nachträglich eingesetzt werden, können sie das Einschieben des Profilfadens in die Längsnut nicht behindern. Wird das Einsetzen der Anschläge von der Innenseite des Metallrahmens her durchgeführt, was ein geringes Spiel zwischen den aneinanderstoßenden Enden des in die Längsnut eingeschobenen Profilfadens verlangt, so bleibt auch die Anordnung der nachträglich eingesetzten Bolzen von außen unsichtbar, weil der verlängerte Steg des Profilfadens die Bolzen abdeckt.

In der Zeichnung ist der Erfindungsgegenstand beispielsweise dargestellt. Es zeigen

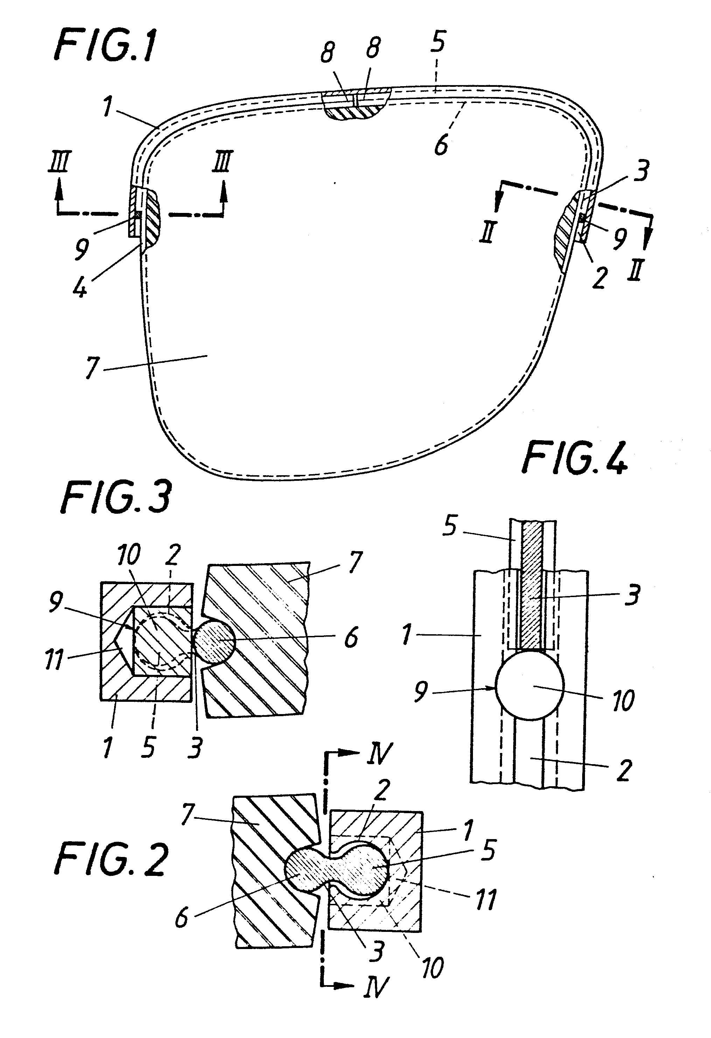

Fig. 1 eine erfindungsgemäße Fassung für Brillengläser in einer teilweise aufgerissenen Draufsicht,

Fig. 2 einen Schnitt nach der Linie II-II der Fig. 1 in einem vergrößerten Maßstab,

Fig. 3 einen Schnitt nach der Linie III-III der Fig. 1, ebenfalls in einem vergrößerten Maßstab und

Fig. 4 einen Schnitt nach der Linie IV-IV der Fig. 2.

Die dargestellte Fassung besteht im wesentlichen aus einem die obere Glashalterung bildenden Metallrahmen 1, der eine hinterschnittene Längsnut 2 zur Aufnahme eines Profilfadens 3 aufweist und aus einem Kunststoffaden 4, der als untere Glashalterung dient. Der Profilfaden 3, der aus Kunststoff besteht, wird durch eine beidseitige Längseinschnürung in zwei Teile geteilt, nämlich in einen in die hinterschnittene Längsnut 2 des Metallrahmens 1 eingreifenden Profilfadenteil 5 und in einen aus der Längsnut 2 vorragenden Steg 6, der in eine Umfangsnut des zu fassenden Brillenglases 7 eingreift. Die beiden Enden 8 des Profilfadens 3 sind dabei von beiden Seiten in die Längsnut 2 eingeschoben, so daß der über die Längsnut 2 hinaus verlängerte Steg 6 den Kunststoffaden 4 für die untere Glashalterung ergibt. Die Einstückigkeit des Kunststoffadens 4 mit dem Profilfaden 3 gewährleistet eine einfache und sichere Halterung des Brillenglases 7, weil die in die Längsnut 2 eingeschobenen Enden 8 des Profilfadens 3 durch Anschläge 9, an denen sich die Stirnseiten der entsprechend abgelängten Profilfadenteile 5 abstützen, gegen ein Herausziehen aus der Längsnut 2 festgehalten werden. Damit ist die Länge des Steges 6 zwischen den endseitigen Profilfadenteilen 5 für die Länge der unteren Glashalterung bestimmend, die somit durch ein Abtrennen des Profilfadenteiles 5 im Bereich des Kunststoffadens 4 genau angepaßt werden kann.

Die in die Längsnut 2 ragenden Anschläge 9 zur Abstützung der endseitigen Profilfadenteile 5 müssen zum Einsetzen des Profilfadens 3 in die hinterschnittene Längsnut 2 entfernt werden. Bestehen die Anschläge 9 aus je einem Bolzen 10, der von der Innenseite de Metallrahmens 1 in eine Sackbohrung 11 eingesetzt werden kann, so ist das Einsetzen der Anschläge 9 einfach möglich. Nach dem Einschieben des Profilfadens 3 in die Längsnut 2 und dem Einsetzen der Bolzen 10 in die Sackbohrung 11 ist eine gesonderte Fixierung der Bolzen 10 unnötig, weil der Profilfaden 3 die Bolzen 10 abdeckt.

0093108

Patentansprüche :

1. Fassung für Brillengläser, bestehend aus einem die obere Glashalterung bildenden Metallrahmen (1), der auf seiner Innenseite eine hinterschnittene Längsnut (2) zur Aufnahme eines Profilfadens (3) aus Kunststoff mit einem aus der Längsnut (2) vorragenden Steg (6) zum Eingriff in die Umfangsnut eins Brillenglases (7) aufweist, und aus einem die untere Glashalterung bildenden, die freien Schenkel des Metallrahmens (1) verbindenden Kunststoffaden (4), dadurch gekennzeichnet, daß sich der Steg (6) des Profilfadens (3) der oberen Glashalterung über den gesamten unteren Fassungsrand erstreckt und den Kunststoffaden (4) der unteren Glashalterung bildet, wobei die von beiden Seiten in die Längsnut (2) des Metallrahmens (1) eingeschobenen Enden (8) des Profilfadens (3) durch im Bereich der freien Schenkel des Metallrahmens (1) in der Längsnut (2) vorgesehene Anschläge (9) für die Stirnseiten des in die Längsnut (2) eingreifenden Profilfadenteiles (5) gegen ein Herausziehen aus der Längsnut (2) festgehalten sind.

2. Fassung nach Anspruch 1, dadurch gekennzeichnet, daß die Anschläge (9) aus in die Längsnut (2) des Metallrahmens (1) einsetzbaren Bolzen (10) bestehen.

FIG.1

FIG.3

FIG.4

FIG.2

0093108